# EUROPEAN PATENT APPLICATION

(11) **EP 2 782 424 A1**
(43) Date of publication of application: **24.09.2014**
(21) Application number: 13182949.1
(22) Date of filing: 04.09.2013
(51) Int. Cl.: H05B 33/08

(54) **Lighting power source and lighting device**

(30) Priority: 22.03.2013 JP 2013061115
(71) Applicant: Toshiba Lighting & Technology Corporation, Yokosuka-shi, Kanagawa 237-8510 (JP)
(72) Inventor: Kitamura, Noriyuki, Kanagawa, 237-8510 (JP); Akahoshi, Hiroshi, Kanagawa, 237-8510 (JP); Otake, Hirokazu, Kanagawa, 237-8510 (JP); Takahashi, Yuji, Kanagawa, 237-8510 (JP)
(74) Representative: Bokinge, Ole

(57) **Abstract**

According to one embodiment, a lighting light source (12) including a current control element (41) and a voltage-dividing resistor (46, 47) is provided. The current control element (41) has a first main electrode, a second main electrode series-connected with respect to a lighting light source (16), and a control electrode for controlling a current flowing between the first main electrode and the second main electrode, and controls a current supplied to the lighting light source (16). The voltage-dividing resistor (46, 47) is parallel-connected with respect to the lighting light source (16) and connected to the control electrode, and inputs a voltage obtained by division of a voltage of the lighting light source (16) to the control electrode.

## Description

### FIELD

Embodiments described herein relate generally to a lighting power source and a lighting device.

### BACKGROUND

In lighting devices, lighting power sources such as incandescent lamps and fluorescent lamps are being replaced by power-saving and long-life light sources including light-emitting diodes (LEDs), for example. In the lighting power sources that supply power to the light sources, it is desired to suppress changes in brightness (flickering) due to distortion of input voltages.

### BRIEF DESCRIPTION OF THE DRAWINGS

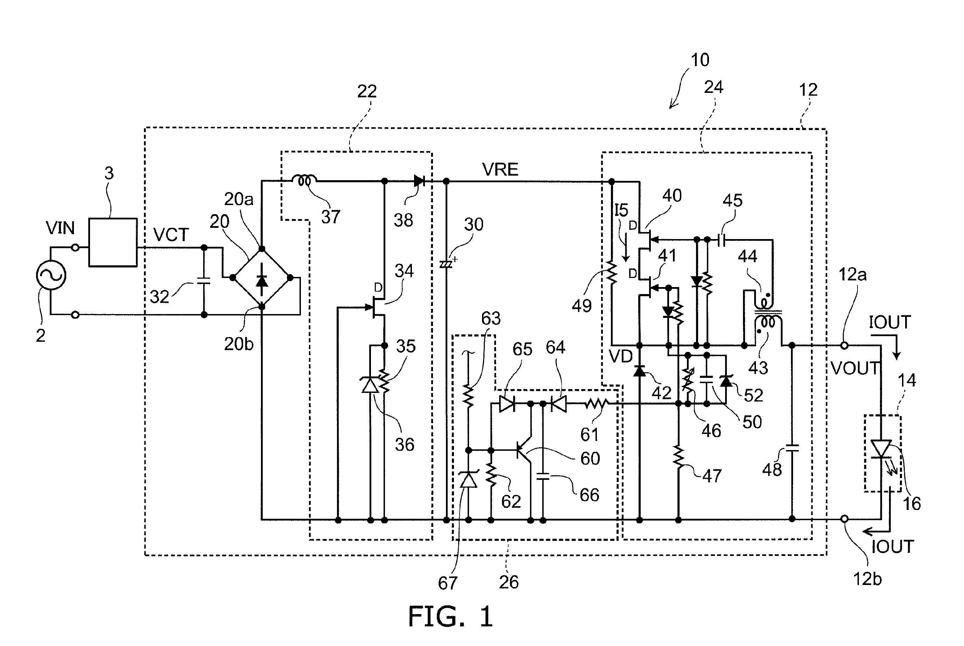

FIG. 1 is a circuit diagram schematically showing a lighting device according to one embodiment.

### DETAILED DESCRIPTION

According to an embodiment of the invention, a lighting power source including a current control element and a voltage-dividing resistor is provided. The current control element has a first main electrode, a second main electrode series-connected with respect to a lighting light source, and a control electrode for controlling a current flowing between the first main electrode and the second main electrode, and controls a current supplied to the lighting light source. The voltage-dividing resistor is parallel-connected with respect to the lighting light source and connected to the control electrode, and inputs a voltage obtained by division of a voltage of the lighting light source to the control electrode.

According to another embodiment of the invention, a lighting device including a lighting load and a lighting power source is provided. The lighting load has a lighting light source. The lighting power source supplies power to the lighting load. The lighting power source includes a current control element and a voltage-dividing resistor. The current control element has a first main electrode, a second main electrode series-connected with respect to the lighting light source, and a first control electrode for controlling a current flowing between the first main electrode and the second main electrode, and controls a current supplied to the lighting light source. The voltage-dividing resistor is parallel-connected with respect to the lighting light source and connected to the first control electrode, and inputs a voltage obtained by division of a voltage of the lighting light source to the first control electrode.

Hereinafter, the respective embodiments will be explained with reference to the drawing.

Note that the drawing is schematic and conceptual, and relationships between thicknesses and widths of the respective parts, ratios in size between the parts, and the like are not necessarily equal to those of actual parts. Further, even when the same parts are shown, the dimensions and ratios of the parts may be shown depending on the drawings.

In this specification and the respective drawings, the same elements as those that have been described with reference to the drawings explained before have the same signs and their detailed explanation will be appropriately omitted.

FIG. 1 is a circuit diagram schematically showing a lighting device according to one embodiment.

As shown in FIG. 1, a lighting device 10 includes a lighting power source 12 and a lighting load 14.

The lighting load 14 has a lighting light source 16. For the lighting light source 16, for example, an LED is used. For the lighting light source 16, for example, a light-emitting element having a forward drop voltage is used. The lighting load 14 applies an output voltage VOUT from the lighting power source 12 and supplies an output current IOUT to light the lighting light source 16. Further, the lighting load 14 may control light by changing at least one of the output voltage VOUT and the output current IOUT. Note that the values of the output voltage VOUT and the output current IOUT are defined in response to the lighting light source 16.

The lighting power source 12 is connected to an alternating-current power supply 2 and a dimmer 3. Note that, in this specification, "connection" refers to electrical connection and includes the case of non-physical connection and the case of connection via another element.

The alternating-current power supply 2 is a commercial power supply, for example. The dimmer 3 generates an alternating-current voltage VCT by conduction angle control from an alternating-current power supply voltage VIN of the alternating-current power supply 2. The lighting power source 12 converts the alternating-current voltage VCT supplied from the dimmer 3 into the output voltage VOUT and outputs the voltage to the lighting load 14, and thereby, lights the lighting light source 16. Further, the lighting power source 12 controls light of the lighting light source 16 in synchronization with the conduction-angle-controlled alternating-current voltage VCT. Note that the dimmer 3 is provided as necessary and dispensable. When the dimmer 3 is not provided, the power supply voltage VIN of the alternating-current power supply 2 is supplied to the lighting power source 12. As below, the case where the dimmer 3 is connected will be explained as an example.

The conduction angle control of the dimmer 3 includes, for example, a phase control (leading edge) method for controlling the conduction phase in a period from the zero cross of the alternating-current voltage to when the absolute value of the alternating-current voltage becomes the maximum value and an anti-phase control (trailing edge) method for controlling the cutoff phase in a period from when the absolute value of the alternating-current voltage becomes the maximum value to the zero cross of the alternating-current voltage.

The dimmer 3 for phase control has a simple circuit configuration and may handle a relatively large power load. However, when a triac is used, light-load operation is difficult and, if the so-called power supply dip that the power supply voltage temporally becomes lower occurs, unstable operation is likely to be caused. Further, when a capacitive load is connected, an inrush current is generated, and there is poor compatibility with the capacitive load.

On the other hand, the dimmer 3 for anti-phase control may operate with light load, no inrush current is generated when the capacitive load is connected, and the operation is stable when the power supply dip occurs. However, the circuit configuration is complex and the temperature easily rises, and the dimmer is not compatible with heavy load. Further, when an inductive load is connected, surge occurs.

In the embodiment, as the dimmer 3, a configuration inserted in series to one of a pair of power supply lines that supply the power supply voltage VIN is exemplified, however, another configuration may be employed.

The lighting power source 12 has a rectifier circuit 20 that converts an alternating-current voltage into a direct-current voltage, a constant current circuit 22 that flows a constant current necessary for the dimmer 3 to perform phase control, a DC-DC converter 24 that generates the output voltage VOUT, and a current control circuit 26 that controls the output current IOUT.

To the rectifier circuit 20, the alternating-current voltage VCT conduction-angle-controlled by the dimmer 3 is input. The rectifier circuit 20 full-wave-rectifies the alternating-current voltage VCT and generates a pulsating-current voltage from the alternating-current voltage VCT. The rectifier circuit 20 is a diode bridge, for example. The rectifier circuit 20 is not limited to the diode bridge. It is only necessary for the rectifier circuit 20 to rectify the alternating-current voltage input from the dimmer 3.

A smoothing capacitor 30 is connected between a high-potential terminal 20a and a low-potential terminal 20b of the rectifier circuit 20. The smoothing capacitor 30 smoothes the pulsating-current voltage rectified by the rectifier circuit 20, and converts the pulsating-current voltage into a direct-current voltage VRE. Further, a filter capacitor 32 that reduces noise contained in the alternating-current voltage VCT is connected to a pair of input terminals of the rectifier circuit 20.

The constant current circuit 22 has a transistor 34, a resistor 35, a zener diode 36, a choke coil 37, and a diode 38, for example. The resistor 35 and the zener diode 36 bias the transistor 34. The transistor 34 is an FET, for example, a normally-on element. The drain of the transistor 34 is connected to the high-potential terminal 20a of the rectifier circuit 20 via the choke coil 37.

The source of the transistor 34 is connected to the low-potential terminal 20b of the rectifier circuit 20 via the resistor 35 and the zener diode 36 in parallel connection. The gate of the transistor 34 is connected to the low-potential terminal 20b of the rectifier circuit 20. Further, the high-potential terminal 20a of the rectifier circuit 20 is connected to the DC-DC converter 24 via the diode 38.

The constant current circuit 22 is a circuit that flows a constant current for operating the phase circuit of the dimmer 3, for example. By connecting an element with the smaller impedance than that of the phase circuit as a load of the rectifier circuit 20, the influence of the input impedance of the downstream DC-DC converter 24 may be suppressed and the dimmer 3 may be stably operated.

The DC-DC converter 24 has an output element 40 (switching element), a current control element 41, a rectifier element 42, an inductor 43, a feedback winding (drive element) 44 that drives the output element 40, a coupling capacitor 45, voltage-dividing resistors 46, 47, an output capacitor 48, and a bias resistor 49, for example.

The output element 40 and the current control element 41 are field-effect transistors (FETs), for example, and high electron mobility transistors (HEMTs), for example, normally-on elements. That is, in this example, the drain of the current control element 41 is the first main electrode, the source is the second main electrode, and the gate is the first control electrode.

The source of the current control element 41 is series-connected to the lighting light source 16. The gate of the current control element 41 is an electrode for controlling the current flowing between the drain and the source of the current control element 41. The drain of the current control element 41 is connected to the smoothing capacitor 30 via the output element 40, for example. The smoothing capacitor 30 supplies the smoothed direct-current voltage VRE to the drain of the current control element 41.

The drain (third main electrode) of the output element 40 is connected to the high-potential terminal 20a of the rectifier circuit 20 via the constant current circuit 22. The source (fourth main electrode) of the output element 40 is connected to the drain of the current control element 41. That is, the output element 40 is connected between the rectifier circuit 20 and the current control element 41. The gate (second control electrode) of the output element 40 is connected to one end of the feedback winding 44 via the coupling capacitor 45. The gate of the output element 40 is used for control of the current flowing between the drain and the source.

The source of the current control element 41 is connected to one end of the inductor 43 and the other end of the feedback winding 44. To the gate of the current control element 41, a voltage obtained by voltage division of the source potential of the current control element 41 by the voltage-dividing resistors 46, 47 is input. The source of the current control element 41 is connected to the lighting light source 16 via the inductor 43. The voltage-dividing resistor 46 is parallel-connected with respect to the lighting light source 16. That is, to the gate of the current control element 41, a voltage obtained by voltage division of the voltage (forward voltage) of the lighting light source 16 by the voltage-dividing resistors 46, 47 is input. Protection diodes are respectively connected to the gate of the output element 40 and the gate of the current control element 41.

The bias resistor 49 is connected between the drain of the output element 40 and the source of the current control element 41, and supplies direct-current voltages to the voltage-dividing resistors 46, 47. As a result, a potential lower than that of the source is supplied to the gate of the current control element 41.

To the voltage-dividing resistor 46, a capacitor 50 and a zener diode 52 are respectively parallel-connected. The voltage-dividing resistor 46, the capacitor 50, and the zener diode 52 function as a low-pass filter.

The time constant of the voltage-dividing resistor 46 and the capacitor 50 is equal to or less than a half cycle of the power supply voltage VIN (alternating-current voltage), for example. That is, the time constant of the voltage-dividing resistor 46 and the capacitor 50 is equal to or less than 120 Hz, for example. Further, the time constant of the voltage-dividing resistor 46 and the capacitor 50 is equal to or more than the cycle of the switching frequency of the output element 40, for example. For example, when the switching frequency of the output element 40 is 1 MHz and the frequency of the power supply voltage VIN is 60 Hz, the time constant of the voltage-dividing resistor 46 and the capacitor 50 is from 1 µsec to 8.3 msec. For example, the capacity of the capacitor 50 is set so that the above described time constant may be satisfied.

The inductor 43 and the feedback winding 44 are magnetically coupled with polarity with which a positive voltage is supplied to the gate of the output element 40 when a current that increases and flows from one end to the other end of the inductor 43.

The rectifier element 42 is connected between the source of the current control element 41 and the low-potential terminal 20b of the rectifier circuit 20 with the direction from the low-potential terminal 20b toward the current control element 41 as the forward direction.

The other end of the inductor 43 is connected to a high-potential output terminal 12a and the low-potential terminal 20b of the rectifier circuit 20 is connected to a low-potential output terminal 12b. Further, the output capacitor 48 is connected between the high-potential output terminal 12a and the low-potential output terminal 12b.

The lighting load 14 is connected in parallel to the output capacitor 48 between the high-potential output terminal 12a and the low-potential output terminal 12b. The DC-DC converter 24 converts the direct-current voltage VRE generated by the smoothing capacitor 30 into the direct-current output voltage VOUT, and outputs the voltage to the lighting load 14.

The current control circuit 26 has a transistor 60, resistors 60 to 63, diodes 64 to 65, a capacitor 66, and a zener diode 67, for example. In this example, the transistor 60 is a p-n-p transistor. The transistor 60 is a normally-on element. The transistor 60 may be an n-p-n transistor or an FET. The transistor 60 may be a normally-off type.

One end of the resistor 61 is connected to a connection point between the voltage-dividing resistors 46, 47. The other end of the resistor 61 is connected to the anode of the diode 64. The cathode of the diode 64 is connected to the emitter of the transistor 60. That is, the transistor 60 is electrically connected to the voltage-dividing resistors 46, 47 via the resistor 61 and the diode 64. The anode of the diode 65 is connected to the base of the transistor 60. The cathode of the diode 65 is connected to the emitter of the transistor 60.

The capacitor 66 is connected between the emitter of the transistor 60 and the low-potential terminal 20b of the rectifier circuit 20. The resistor 62 is connected between the base of the transistor 60 and the low-potential terminal 20b of the rectifier circuit 20. The zener diode 67 is connected between the base of the transistor 60 and the low-potential terminal 20b of the rectifier circuit 20. That is, the zener diode 67 is parallel-connected with respect to the resistor 62. The collector of the transistor 60 is connected to the low-potential terminal 20b of the rectifier circuit 20.

One end of the resistor 63 is connected to the base of the transistor 60. A predetermined direct-current voltage is applied to the other end of the resistor 63. Thereby, a substantially constant voltage in response to the breakdown voltage of the zener diode 67 is applied to the base of the transistor 60. Accordingly, a substantially constant current flows between the emitter and the collector of the transistor 60. As described above, the transistor 60 functions as a current control element. The current control circuit 26 adjusts the current flowing in the voltage-dividing resistor 46, for example. The current control circuit 26 makes the current flowing in the voltage-dividing resistor 46 to be substantially constant, for example. That is, the current control circuit 26 is a constant current circuit.

Next, an operation of the lighting power source 12 will be explained.

First, the case where the light control degree of the dimmer 3 is set to nearly 100% and the input power supply voltage VIN is transmitted with little change, i.e., the case where the highest direct-current voltage VRE is input to the DC-DC converter 24 will be explained.

When the power supply voltage VIN is supplied to the lighting power source 12, both the output element 40 and the current control element 41 are on because they are the normally-on elements. Then, a current flows in a path from the output element 40 through the current control element 41 and the inductor 43 to the output capacitor 48, and the output capacitor 48 is charged. The voltage between the ends of the output capacitor 48, i.e., the voltage between the high-potential output terminal 12a and the low-potential output terminal 12b is supplied to the lighting light source 16 of the lighting load 14 as the output voltage of the lighting power source 12. Note that the output element 40 and the current control element 41 are on, and a reverse voltage is applied to the rectifier element 42. No current flows in the rectifier element 42.

When the output voltage VOUT reaches a predetermined voltage, the output current IOUT flows in the lighting light source 16 and the lighting light source 16 lights. Concurrently, a current flows in a path from the output element 40 through the current control element 41, the inductor 43, and the output capacitor 48 to the lighting light source 16. For example, when the lighting light source 16 is an LED, the predetermined voltage is the forward voltage of the LED and determined depending on the lighting light source 16. Further, when the lighting light source 16 turns off, the output current IOUT does not flow and the output capacitor 48 holds the value of the output voltage VOUT.

The direct-current voltage VRE input to the DC-DC converter 24 is substantially high compared to the output voltage VOUT. That is, the potential difference ΔV between input and output is substantially large. Accordingly, the current flowing in the inductor 43 increases. The feedback winding 44 is magnetically coupled to the inductor 43, and an electromotive force with polarity that makes the coupling capacitor 45 side to be a high potential is induced. Accordingly, a positive potential with respect to the source is supplied to the gate of the output element 40 via the coupling capacitor 45, and the output element 40 maintains the on-state.

When the current flowing in the current control element 41 exceeds an upper limit value, the drain-source voltage of the current control element 41 rapidly rises. Accordingly, the gate-source voltage of the output element 40 becomes lower than a threshold voltage and the output element 40 turns off. The upper limit value is a saturated current value of the current control element 41 and defined by the potential input to the gate of the current control element 41. The gate potential of the current control element 41 is set depending on the direct-current voltages supplied to the voltage-dividing resistors 46, 47 via the bias resistor 49, the voltage of the lighting light source 16, the voltage division ratio of the voltage-dividing resistors 46, 47, and the current adjustment of the current control circuit 26. Note that, as described above, the gate potential of the current control element 41 is a negative potential with respect to the source, and the saturated current value may be restricted to an appropriate value.

The inductor 43 continues to flow a current in a path from the rectifier element 42 through the output capacitor 48 to the lighting load 14. Concurrently, the inductor 43 releases energy, and the current of the inductor 43 decreases. Accordingly, an electromotive force with polarity that makes the coupling capacitor 45 to be a low potential is induced in the feedback winding 44. A negative potential with respect to the source is supplied to the gate of the output element 40 via the coupling capacitor 45, and the output element 40 maintains the off-state.

When the energy accumulated in the inductor 43 becomes zero, the current flowing in the inductor 43 becomes zero. The direction of the electromotive force induced in the feedback winding 44 is reversed again, and the electromotive force that makes the coupling capacitor 45 side to be the high potential is induced. Thereby, a higher potential is supplied to the gate of the output element 40 than that to the source and the output element 40 turns on again. Thereby, the state in which the output voltage VOUT reaches the predetermined voltage is returned.

Subsequently, the above described operation is repeated. Thereby, switching to on and off of the output element 40 is automatically repeated and the output voltage VOUT dropping from the power supply voltage VIN is supplied to the lighting light source 16. That is, in the lighting power source 12, the switching frequency of the output element 40 is set by the voltage-dividing resistors 46, 47 and the current control circuit 26. Further, the current supplied to the lighting light source 16 becomes a constant current having the upper limit value restricted by the current control element 41. Accordingly, the lighting light source 16 may be stably lighted.

Also, when the light control degree of the dimmer 3 is set to a value smaller than 100% and the input alternating-current voltage VCT is conduction-angle-controlled and transmitted, i.e., when the high direct-current voltage VRE is input to the DC-DC converter 24, the same applies if the output element 40 may continue oscillation. In response to the light control degree of the dimmer 3, the value of the direct-current voltage VRE input to the DC-DC converter 24 changes, and the average value of the output current IOUT may be controlled. Therefore, the light of the lighting light source 16 of the lighting load 14 may be controlled in response to the light control degree.

Further, when the light control degree of the dimmer 3 is set to an even smaller value, i.e., when the direct-current voltage VRE input to the DC-DC converter 24 is even lower, even when the output element 40 turns on, the potential difference between the ends of the inductor 43 is smaller and the current flowing in the inductor 43 may not increase. Therefore, the output element 40 does not turn off and outputs a constant direct current. That is, the lighting power source 12 performs an operation like a series regulator when the light control degree of the dimmer 3 is small, i.e., when the potential difference ΔV between input and output is small.

As described above, the lighting power source 12 performs the switching operation when the potential difference ΔV is larger than a predetermined value and performs the operation like a series regulator when the potential difference ΔV is smaller. When the potential difference ΔV is larger, the product of the potential difference ΔV and the current is larger, and, if the operation of the series regulator is performed, loss becomes larger. Therefore, the switching operation when the potential difference ΔV is larger is suitable for the lower power consumption. Further, when the potential difference ΔV is smaller, the loss is smaller and the operation as the series regulator is not problematic.

Further, in the lighting power source 12, when the potential difference ΔV is smaller than the predetermined value, the current vibrates while the output element 40 does not turn off, but maintains the on-state, and lights the lighting light source 16 of the lighting load 14 in the average value of the current. Furthermore, when the potential difference ΔV is even smaller, the output element 40 outputs a direct current to the lighting load 14 to light the lighting light source 16 while maintaining the on-state. As a result, in the lighting power source 12, the output current may be continuously changed to zero. For example, in the lighting device 10, the lighting light source 16 of the lighting load 14 may be smoothly turned off.

In the lighting power source 12, according to the potential difference ΔV, the output current IOUT may be continuously changed from the maximum value at switching operation of the output element 40 to the minimum value when the direct current is output with the on-state of the output element 40 maintained. For example, in the lighting device 10, the light of the lighting light source 16 may be controlled continuously in a range from 0% to 100%.

In the lighting power source 12, the direct-current voltage from the bias resistor 49 and the voltage of the lighting light source 16 are divided by the voltage-dividing resistors 46, 47 and input to the gate of the current control element 41, and thereby, the switching frequency of the output element 40 is set. The voltage of the lighting light source 16 is stable to some extent even when the input voltage such as the power supply voltage VIN or the alternating-current voltage VCT is distorted. Therefore, as described above, the direct-current voltage from the bias resistor 49 and the voltage of the lighting light source 16 are divided by the voltage-dividing resistors 46, 47 and input to the gate of the current control element 41, and thereby, changes in brightness of the lighting light source 16 due to distortion of the input voltage may be suppressed without preparation of a special control reference or the like. For example, flickering of the lighting light source 16 may be suppressed. For example, fluctuations of the voltage of the lighting light source 16 due to the fluctuations of the input voltage may be suppressed.

In the lighting power source 12, the capacitor 50 is parallel-connected with respect to the voltage-dividing resistor 46 to form a low-pass filter. Further, in the lighting power source 12, the time constant of the voltage-dividing resistor 46 and the capacitor 50 is set to be equal to or less than the half cycle of the power supply voltage VIN, for example. Thereby, for example, fluctuations of the gate potential of the current control element 41 with switching of the output element 40 may be suppressed. For example, even when the inductor 43 intervenes, they appear in the voltage-dividing resistors 46, 47, and the gate potential of the current control element 41 may be made more stable. That is, the changes in brightness of the lighting light source 16 may be suppressed more appropriately. For example, the switching frequency is set to be higher and the capacity of the capacitor 50 is set to be smaller. Thereby, for example, the responsiveness becomes higher and current ripple in a relatively wide range may be suppressed.

Further, in the lighting power source 12, the current control circuit 26 is connected to the voltage-dividing resistor 46 so that the current flowing in the voltage-dividing resistor 46 may be substantially constant. Thereby, for example, the gate potential of the current control element 41 may be made more stable.

Furthermore, the transistor 60 of the current control circuit 26 is the normally-on type. Thereby, for example, under the condition that the current control circuit 26 does not operate, it may be difficult to input the negative potential to the gate of the current control element 41, and the current control element 41 may be turned off. For example, when the operation of the lighting power source 12 is stopped, the output element 40 and the current control element 41 may be promptly operated toward halt. For example, application of the high output voltage VOUT to the lighting light source 16 and temporal lighting of the lighting light source 16 with unintended high brightness may be suppressed when lighting is started (when supply of the power supply voltage VIN is started).

The embodiment is explained with reference to the specific examples, however, various modifications not limited to those may be made.

For example, the output element 40 and the current control element 41 are not limited to GaN HEMT. For example, a semiconductor element formed using a semiconductor having a wide bandgap (wide-bandgap semiconductor) such as silicon carbide (SiC), gallium nitride (GaN), or diamond for a semiconductor substrate may be applied. Here, the wide-bandgap semiconductor refers to a semiconductor having a wider bandgap than gallium arsenide (GaAs) having the bandgap of about 1.4 eV. For example, the wide-bandgap semiconductor includes a semiconductor having a bandgap equal to or more than 1.5 eV, gallium phosphide (GaP, having the bandgap of about 2.3 eV), gallium nitride (GaN, having the bandgap of about 3.4 eV), diamond (C, having the bandgap of about 5.27 eV), aluminum nitride (AlN, having the bandgap of about 5.9 eV), and silicon carbide (SiC). Those wide-bandgap semiconductor elements may be made smaller than the silicon semiconductor elements with equal withstand voltage, and parasitic capacity is smaller and the high-speed operation may be performed, and thus, the switching cycle may be made shorter and sizes of the wiring parts and capacitors may be made smaller.

In the embodiment, the output element 40 and the current control element 41 are cascode-connected, switching is performed in the output element 40, and the current control is performed in the current control element 41. Not limited to that, but switching and current control may be performed only in the current control element 41, for example. Further, the lighting power source 12 may not perform switching, but perform only current control of the input direct-current voltage VRE in the current control element 41 and supply the voltage to the lighting light source 16, for example. For example, as described above, when the potential difference ΔV between input and output is small, it is not necessary to perform switching.

Note that the lighting light source 16 is not limited to the LED, but may be an organic EL (Electro-Luminescence) or an OLED (Organic light-emitting diode), for example. To the lighting load 14, a plurality of the lighting light sources 16 may be series-connected or parallel-connected.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lighting power source (12) comprising:
a current control element (41) that includes a first main electrode, a second main electrode series-connected with respect to a lighting light source (16), and a control electrode for controlling a current flowing between the first main electrode and the second main electrode, and controls a current supplied to the lighting light source (16); and
a voltage-dividing resistor (46, 47) that is parallel-connected with respect to the lighting light source (16) and connected to the control electrode, and inputs a voltage obtained by division of a voltage of the lighting light source (16) to the control electrode.

2. The lighting power source (12) according to claim 1, further comprising:
a rectifier circuit (20) that rectifies an alternating-current voltage;
a smoothing capacitor (30) that smoothes the voltage rectified by the rectifier circuit (20), converts the voltage into a direct-current voltage, and supplies the voltage to the first main electrode; and
a capacitor (50) parallel-connected with respect to the voltage-dividing resistor (46, 47),
wherein a time constant of the voltage-dividing resistor (46, 47) and the capacitor (50) is equal to or less than a half cycle of the alternating-current voltage.

3. The lighting power source (12) according to claim 1 or 2, wherein the current control element (41) is a normally-on type.

4. The lighting power source (12) according to any one of claims 1 to 3, further comprising a constant current circuit (26) that is connected to an end part of the voltage-dividing resistor (46) opposite to the control electrode, and adjusts a current flowing in the voltage-dividing resistor (46).

5. A lighting device (10) comprising:
a lighting load (14); and
the lighting power source (12) according to any one of claims 1 to 4 that supplies power to the lighting load (14).

## Amended claims

### Amended claims in accordance with Rule 137(2) EPC.

**1.** A lighting power source (12) comprising:
a current control element (41) that includes a first main electrode, a second main electrode series-connected to a lighting light source (16), and a control electrode for controlling a current flowing between the first main electrode and the second main electrode, and controls a current supplied to the lighting light source (16);
voltage-dividing resistors (46, 47) that are parallel-connected to the lighting light source (16) and input a voltage obtained by division of a voltage of the lighting light source (16) to the control electrode;
output terminals (12a, 12b) that are connected to both ends of the lighting light source (16); and
a current control circuit (26) that controls an output current of the lighting light source (16),
**characterized in that**
one end of a first of the voltage-dividing resistors (46, 47) is connected to the control electrode of the current control element (41) and the output terminal (12a),
one end of a second of the voltage-dividing resistors (46, 47) is connected to the output terminal (12b),
the other end of the first voltage-dividing resistor (46) is connected to the other end of the second voltage-dividing resistor (47), and
the current control circuit (26) is connected to a connection point between the voltage-dividing resistors (46, 47) .

**2.** The lighting power source (12) according to claim 1, further comprising:
a rectifier circuit (20) that rectifies an alternating-current voltage;
a smoothing capacitor (30) that smoothes the voltage rectified by the rectifier circuit (20), converts the voltage into a direct-current voltage, and supplies the voltage to the first main electrode; and
a capacitor (50) parallel-connected with respect to the voltage-dividing resistor (46, 47),
wherein a time constant of the voltage-dividing resistor (46, 47) and the capacitor (50) is equal to or less than a half cycle of the alternating-current voltage.

**3.** The lighting power source (12) according to claim 1 or 2, wherein the current control element (41) is a normally-on elem ent.

**4.** The lighting power source (12) according to any one of claims 1 to 3, wherein the current control circuit (26) adjusts a current flowing in the first voltage-dividing resistor (46).

**5.** A lighting device (10) comprising:
a lighting power source (12) according to any one of claims 1 to 4.
